## Europäisches Patentamt

## European Patent Office

## Office européen des brevets

(19)

(11) Veröffentlichungsnummer: **0 248 087**

**A1**

(12) **EUROPÄISCHE PATENTANMELDUNG**

Veröffentlicht nach Art. 158 Abs. 3 EPÜ

(21) Anmeldenummer: 86900996.9

(22) Anmeldetag: 26.11.85

Daten der zugrundeliegenden internationalen Anmeldung:

(86) Internationale Anmeldenummer:
PCT/SU85/00097

(87) Internationale Veröffentlichungsnummer:
WO87/03350 (04.06.87 87/12)

(51) Int. Cl.³: **F 16 H 3/16**
**F 16 H 5/00**

(43) Veröffentlichungstag der Anmeldung:
**09.12.87 Patentblatt 87/50**

(84) Benannte Vertragsstaaten:
**AT DE FR GB IT SE**

(71) Anmelder: KUIBYSHEVSKOE STANKOSTROITELNOE
PROIZVODSTVENNOE OBIEDINENIE ZAVOD
KOORDINATNO-RASTOCHNYKH STANKOV IMENI
60-LETIA SSSR

Kuibyshev, 443022(SU)

(72) Erfinder: SPITSYN, Nikolai Fedorovich
ul. Pobedy, 8b-17
Kuibyshev, 443083(SU)

(74) Vertreter: Patentanwälte Zellentin & Partner
Zweibrückenstrasse 15
D-8000 München 2(DE)

(54) SCHALTGETRIEBE.

(57) A gear-changing mechanism comprises a shaft (3), on which is mounted a unit (4) with meshing elements (5) and a device for locking the unit (4) in relation to the shaft (3), comprising, in turn, a bushing (14), which embraces the unit (4) with the possibility of reciprocating movements along it and locking elements (15). A through-opening (19) oriented in a plane perpendicular to the axis a – a of the shaft (3) is provided in the unit (4) for location of the locking elements (15). A corresponding hollow (18) is provided on the shaft (3) for location of the locking elements (15) during locking of the unit (4) in relation to the shaft (3). A groove (17) is provided in the bushing (14) for location of the locking elements (15) when disconnecting the unit (4) from the shaft (3). An annular groove (21) is provided on the external surface of the bushing (14) to ensure the interaction with a fork (22) serving for reciprocating displacement of the unit (4) with the meshing elements (5).

FIG. 1

GESCHWINDIGKEITSUMSCHALTMECHANISMUS 0248087

## Technisches Gebiet

Die vorliegende Erfindung bezieht sich auf das Gebiet des Maschinenbaus, insbesondere auf einen Geschwindigkeitsumschaltmechanismus.

## Stand der Technik

Weit bekannt ist ein Geschwindigkeitsumschaltmechanismus, in dessen Gehäuse auf einer Welle ein Block mit Eingriffselementen starr befestigt ist. Die Welle ist an dem einen Ende mit einem Hebel zur manuellen Geschwindigkeitsumschaltung, mit dem anderen aber mit einem hydraulischen Kraftzylinder zur mechanisierten Geschwindigkeitsumschaltung verbunden. Dies bedeutet, daß zur Geschwindigkeitsumschaltung sowohl/manuelle als auch/mechanisierte Einwirkung auf die Welle ausgenutzt werden kann.

Ein derartiger Geschwindigkeitsumschaltmechanismus kann nur in dem Fall verwendet werden, wo die Eingriffselemente /Ritzel, Kupplungen/ Geradzähne besitzen, während die Achsen der Eingriffselemente in der horizontalen Lage angeordnet sind.

Zur Erhöhung der Umfangsgeschwindigkeit bei der Drehung der Eingriffselemente muß man Ritzel und Kupplungen mit Schrägzähnen verwenden. Dies führt zur Leistungssteigerung von Werkzeugmaschinen und zur Erhöhung der Oberflächengüte von zu bearbeitenden Werkstücken.

Sollte man aber in diesem Geschwindigkeitsumschaltmechanismus Eingriffselemente mit Schrägzähnen verwenden, so wird sich der Umschaltmechanismus unter der Wirkung der Axialkraft selbsttätig abschalten.

Im Maschinenbau gibt es viele Arten von Werkzeugmaschinen mit vertikaler Anordnung der Achsen von Eingriffselementen, in denen der genannte Geschwindigkeitsumschaltmechanismus nicht eingesetzt werden kann, weil im Falle der vertikalen Anordnung der Achsen der Eingriffselemente sich der Geschwindigkeitsumschaltmechanismus unter der Wirkung des Gesamtgewichtes der Welle und des Blocks mit den Eingriffselementen abschalten würde.

Falls geradzahnige Eingriffselemente verwendet werden, ist der Überdeckungsgrad des Getriebes verhältnismäßig klein/kleiner als 2/, wodurch eine große Vibration des Mechanismus zu verzeichnen ist und eine hohe Belastung auf jeden Zahn übertragen wird, was eine geringe Lebensdauer und Zuverlässigkeit der Einrichtung zur Folge hat.

Bekannt ist ein Geschwindigkeitsumschaltmechanismus /US-PS Nr. 2753725, in dessen Gehäuse auf einer Welle ein Block mit Eingriffselementen drehbar angeordnet ist.

Als Eingriffselemente sind Zahnräder mit Schrägzähnen auf der Außen- und der Stirnseite mit einem gleichen Schrägungswinkel verwendet. Zwischen den Zahnrädern ist auf derselben Welle eine Kupplung angeordnet, die stirnseitige Gegenzähne aufweist, die unter einem Winkel, der dem Schrägungswinkel der stirnseitigen Zähne des Zahnrades gleich ist, ausgeführt sind.

Die Kupplung ist relativ zur Welle hin- und herverschiebbar angeordnet.

An der Außenfläche der Kupplung ist eine Ringeindrehung ausgeführt, wo eine Gabel angeordnet ist, die zur hin- und hergehenden Verschiebung der Kupplung bei der Geschwindigkeitsumschaltung bestimmt ist.

Durch periodischen Eingriff der stirnseitigen Zähne der Zahnräder und der Zähne der Kupplung findet die Geschwindigkeitsumschaltung statt.

Die Verwendung der Zahnräder mit Schrägzähnen auf der Außenseite gestattet es, die Umfangsgeschwindigkeit bei der Drehung der Eingriffselemente etwa um das Zweifache gegenüber dem vorbeschriebenen Mechanismus zu erhöhen, was zu einer Leistungssteigerung von Werkzeugmaschinen, in denen der besagte Geschwindigkeitsumschaltmechanismus zum Einsatz gelangt, und zur Erhöhung der Oberflächengüte von zu bearbeitenden Werkstücken führt.

Für den Fall, daß Geschwindigkeiten beibehalten werden, welche den im obenbeschriebenen Mechanismus verwendeten Geschwindigkeiten ähnlich sind, führt die Verwendung von Schrägzähnen in den Eingriffselementen zu einer beträchtlichen Vibrations- und Geräuschminderung.

Jedoch führt die Verwendung von Zahnrädern mit Schrägzähnen auf der Außenseite zum Auftreten einer Axialkraft, die nur zum Teil durch das Vorhandensein von stirnseitigen Schrägzähnen der Kupplung kompensiert wird.

Der übriggebliebene Teile der Axialkraft wirkt über die Kupplung auf die Gabel ein. Infolgedessen entstehen an den Berührungsflächen von Kupplung und Gabel große Reibungskräfte, was einen Verschleiß und eine Erwärmung der kontaktierenden Teile und des Mechanismus im ganzen zur Folge hat.

Ein solcher Geschwindigkeitsumschaltmechanismus kann nur in dem Fall eingesetzt werden, wenn die Achsen der Eingriffselemente /Ritzel, Kupplungen/ in der horizontalen Lage angeordnet sind.

Bei vertikaler Anordnung der Eingriffselemente wird auf die Gabel nicht nur die übriggebliebene Axialkraft, sondern auch das Gewicht der umzuschaltenden Kupplungen wirken, was zu einer weiteren Vergrößerung der Reibungskraft an den Berührungsflächen von Kupplung und Gabel führt.

Alles das führt zu einer Verringerung der Lebensdauer und Zuverlässigkeit des Geschwindigkeitsumschaltmechanismus sowie dazu, daß dieser Mechanismus bei begrenzten Umfangsgeschwindigkeiten der Eingriffselemente nicht eingesetzt werden kann.

Bekannt ist ein Geschwindigkeitsumschaltmechanismus /UdSSR-Urheberschein Nr. 337200

in dessen Gehäuse auf einer Welle ein Block mit Eingriffselementen angeordnet ist. Die Eingriffselemente des Blocks sind mit Schrägzähnen ausgeführt. Der Block weist auf der Außenfläche eine Ringeindrehung zur Zusammenwirkung mit einer Gabel auf, die dazu bestimmt ist, dem Block eine hin- und hergehende Verschiebung relativ zur Welle bei einer Geschwindigkeitsumschaltung zu verleihen.

Außerdem besitzt der Geschwindigkeitsumschaltmechanismus eine Einrichtung zur Fixierung des Blocks in bezug auf die Welle.

Die Einrichtung zur Fixierung des Blocks mit Eingriffselementen in bezug auf die Welle enthält einen Hydraulikzylinder, in dessen Gehäuse sich ein Kolben mit Kolbenstange befindet.

Die Kolbenstange ist mit einem Stößel starr verbunden, der einen etwas kleineren Durchmesser als die Kolbenstange besitzt. Den Stößel umfaßt eine hin- und herverschiebbare Büchse, die mit der Gabel starr verbunden ist.

Im Gehäuse des Hydraulikzylinders ist eine Bohrung ausgeführt, in der ein Feststeller untergebracht ist. In der Büchse sind zwei Bohrungen und im Stößel zwei entsprechende Ringnuten zum Zusammenwirken mit dem Feststeller ausgeführt. Während der Geschwindigkeitsumschaltung fixiert der Feststeller die Büchse mit der Gabel in der einer und in der anderen Stellung, welche jeweils der erforderlichen Lage der Eingriffselemente des Blocks entsprechen.

Das Vorhandensein eines Feststellers gewährleistet die erforderliche Lage des Blocks in bezug auf die Welle. Die Axialkraft vermag nicht den Block während des Arbeitsprozesses zu verschieben.

Jedoch wird diese Axialkraft während des Arbeitsprozesses vollständig von der Gabel über die Berührungsfläche mit dem Block übernommen.

Diese Axialkraft schafft Bedingungen für die Gleitreibung an der Berührungsstelle der Oberflächen von Gabel und Block. Infolgedessen finden eine große Wärmeentwicklung und ein intensiver Verschleiß der Berührungsflächen statt, was eine Senkung der Zuverlässigkeit und Lebensdauer des Geschwindigkeitsumschaltmechanismus zur Folge hat.

In Anbetracht des Obengesagten ist es unmöglich, die in Rede stehenden Geschwindigkeitsumschaltmechanismen in Werkzeugmaschinen zur Bearbeitung von Werkstücken mit hoher Oberflächengenauigkeit einzusetzen.

Offenbarung der Erfindung

Der Erfindung liegt die Aufgabe zugrunde, einen Geschwindigkeitsumschaltmechanismus mit einer solchen Einrichtung zur Fixierung des Blocks in bezug auf die Welle zu schaffen, die es erlauben würde, die Zuverlässigkeit und Lebensdauer des Mechanismus zu erhöhen und diesen Mechanismus

- 5 -

in Werkzeugmaschinen zur Bearbeitung von Werkstücken mit hoher Oberflächengenauigkeit einzusetzen.

Diese Aufgabe ist durch Schaffung eines Geschwindigkeitsumschaltmechanismus gelöst, in dessen Gehäuse auf einer Welle ein Block mit Eingriffselementen angeordnet ist, welcher mit einer Gabel zur hin- und hergehenden Verschiebung bei der Geschwindigkeitsumschaltung kinematisch verbunden ist und eine Einrichtung zur Fixierung des Blocks in bezug auf die Welle aufweist erfindungsgemäß die Einrichtung zur Fixierung des Blocks eine Büchse, die den Block mit Eingriffselementen mit der Möglichkeit einer hin- und hergehenden Verschiebung umfaßt, sowie Feststeller enthält, für deren Unterbringung im Block zumindest eine Durchgangsbohrung in mindestens einer zur Wellenachse querverlaufenden Ebene ausgeführt ist, wobei in der Welle entsprechende Vertiefungen zur Aufnahme der Feststeller während der Fixierung des Blocks in bezug auf die Welle eingearbeitet sind, und in der Büchse an der dem Block zugewandten Oberfläche zumindest in der Nähe der einen Stirnseite eine Eindrehung zur Aufnahme der Feststeller bei der Entriegelung des Blocks bezüglich der Welle ausgeführt ist, wobei die kinematische Verbindung des Blocks mit der Gabel über die Büchse hergestellt ist, wozu auf der Außenseite der letzteren eine Ringnut zur Zusammenwirkung mit der Gabel eingearbeitet ist.

Bei dem erfindungsgemäßen Mechanismus stimmen die geometrischen Achsen der Welle, des Blocks mit den Eingriffselementen und der Büchse überein. Die Axialkraft wird vom Block aus unmittelbar auf die Welle und weiter auf die Wälzlager vorbei an der Gabel übertragen. Als Folge davon wird die Gleitreibung an der Berührungsstelle von Gabel und Büchse erheblich vermindert. In Verbindung damit wird der Verschleiß der Berührungsflächen verringert, werden die Zuverlässigkeit und Lebensdauer des Geschwindigkeitsumschaltmechanismus erhöht und die Möglichkeit geschaffen, den erfindungsgemäßen Mechanismus in Werkzeugmaschinen zur Bearbeitung von Werkstücken mit hoher Oberflächengenauigkeit einzusetzen.

Alles vorstehend Gesagte verbessert die ökonomischen Kennziffern von Werkzeugmaschinen, in denen dieser Mechanismus zum Einsatz gelangt.

Darüber hinaus wird es möglich, die Achsen des Blocks mit Eingriffselementen vertikal anzuordnen, weil bei dem erfindungsgemäßen Mechanismus auf die Berührungsfläche von Büchse und Gabel nur das Gewicht der Büchse einen Druck ausüben kann, und die Höhe der Reibung der Berührungsflächen ist um ein Vielfaches geringer als beim Prototyp.

Es ist vorteilhaft,daß im Geschwindigkeitsumschaltmechanismus die Einrichtung zur Fixierung des Blocks mindestens einen zusätzlichen Feststeller mit federndem Glied besitzt, für dessen Aufnahme im Block auf der zur Büchse gekehrten Seite und in der Büchse auf der gegenüberliegenden Seite entsprechende Vertiefungen eingearbeitet sind.

Die Verwendung eines zusätzlichen Feststellers mit federndem Glied gestattet es, einen Spalt zwischen der Gabel und den Wänden der Ringnut der Büchse herzustellen. Dieser Spalt schließt eine Reibung der Gabel an der Büchse und folglich eine von der Gleitreibung herrührende Wärmeentwicklung völlig aus.

Das Fehlen einer Gleitreibung erhöht die Zuverlässigkeit und Lebensdauer des Geschwindigkeitsumschaltmechanismus und gestattet es, mit einer noch höheren Genauigkeit Werkstücke auf den Werkzeugmaschinen zu bearbeiten, in denen dieser Mechanismus eingesetzt wird.

Es ist wünschenswert, daß im Geschwindigkeitsumschaltmechanismus die Einrichtung zur Fixierung des Blocks mindestens einen zusätzlichen Feststeller mit federndem Glied besitzt, für dessen Unterbringung in der Büchse auf der zum Block gekehrten Seite eine Durchgangsbohrung ausgeführt ist, während im Block auf der gegenüberliegenden Seite mindestens eine Vertiefung eingearbeitet ist.

Die Verwendung eines zusätzlichen Feststellers mit federndem Glied erlaubt es, einen Spalt zwischen der Gabel und den Wänden der Ringeindrehung der Büchse herzustellen. Dieser Spalt schließt eine Reibung der Gabel an der Büchse und folglich eine von der Gleitreibung herrührende Wärmeentwicklung völlig aus. Das Fehlen der Gleitreibung erhöht die Zuverlässigkeit und Lebensdauer des Geschwindigkeitsumschaltmechanismus und gestattet es, mit einer noch höheren Genauigkeit Werkstücke auf den Werkzeugmaschinen zu bearbeiten, in denen dieser Mechanismus zum Einsatz gelangt.

Außerdem bietet die Ausführung einer Durchgangsbohrung in der Büchse die Möglichkeit, die elastische Kraft des Gliedes zu regeln und dessen Auswechselung im Falle eines Bruchs ohne Zerlegung des gesamten Mechanismus vorzunehmen.

Beschreibung

Zur Erläuterung der Erfindung sind nachstehend Ausführungsbeispiele des Geschwindigkeitsumschaltmechanismus unter Bezugnahme auf Zeichnungen angeführt. Es zeigen:

Fig. 1 einen erfindungsgemäßen Geschwindigkeitsumschaltmechanismus, im Schnitt mit Ausbrüchen;

Fig. 2 eine Variante, wobei im Block zwei Durchgangsbohrungen vorgesehen sind, während in der Büchse Eindrehungen in der Nähe der beiden Stirnseiten ausgeführt sind;

Fig. 3 einen erfindungsgemäßen Mechanismus, bei dem im Block eine Vertiefung zur Aufnahme eines zusätzlichen Feststellers eingearbeitet ist;

Fig. 4 einen erfindungsgemäßen Mechanismus, bei dem in der Büchse eine Durchgangsbohrung zur Unterbringung eines zusätzlichen Feststellers ausgeführt ist;

Fig. 5 dasselbe wie in Fig. 2, wobei im Block eine Vertiefung zur Aufnahme eines zusätzlichen Feststellers eingearbeitet ist.

Ausführungsformen der Erfindung

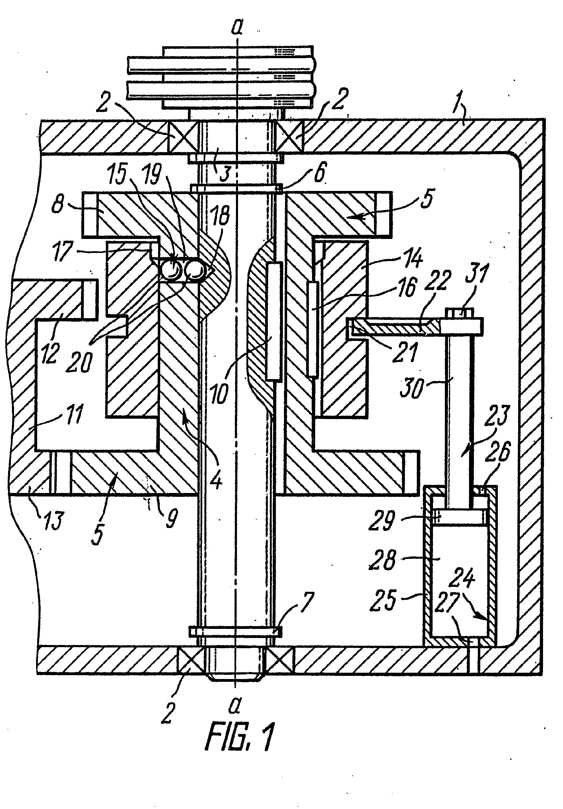

Der Geschwindigkeitsumschaltmechanismus besitzt ein Gehäuse 1 /Fig. 1/, in dem in Wälzlagern 2 eine Welle 3 befestigt ist. Auf der Welle 3 ist ein Block 4 mit Eingriffselementen 5 angeordnet, welcher in bezug auf die Welle 3 hin- und herverschiebbar innerhalb von Grenzen ist, die durch auf der Welle 3 angebrachte Ringe 6 und 7 gesetzt sind.

Die Eingriffselemente 5 des Blocks 4 stellen Zahnräder 8 und 9 dar. Das Zahnrad 8 besitzt Geradzähne, während das Zahnrad 9 Schrägzähne aufweist.

- 8 -

Der Block ist durch einen Längskeil 10 gegen Drehung relativ zur Welle 3 gesichert.

Im vorliegenden Beispiel stellen die Eingriffselemente 5 Zahnräder 8 und 9 dar, jedoch können als Eingriffselemente Kupplungen einer beliebigen bekannten Bauart mit an der Außenfläche oder der Stirnseite befindlichen Zähnen benutzt werden.

Der Geschwindigkeitsumschaltmechanismus besitzt einen weiteren Block 11 mit Zahnrädern 12 und 13, welcher mit dem Block 4 periodisch zum Eingriff kommt. Das Zahnrad 12 des Blocks 11 besitzt Geradzähne, während das Zahnrad 13 Schrägzähne aufweist. Das Zahnrad 12 des Blocks 11 kommt periodisch mit dem Zahnrad 8 des Blocks 4 in Eingriff, während das Zahnrad 13 des Blocks 11 mit dem Zahnrad 9 des Blocks 4 zum Eingriff kommt.

Beim Eingriff des Zahnrades 9 des Blocks 4 mit dem Zahnrad 13 des Blocks 11 entsteht eine Axialkraft, die den Block 4 relativ zur Welle 3 zu verschieben sucht. Zum Ausgleich dieser Axialkraft besitzt der Geschwindigkeitsumschaltmechanismus eine Einrichtung zur Fixierung des Blocks 4 in bezug auf die Welle 3 in einer vorgegebenen Lage.

Die Einrichtung zur Fixierung des Blocks 4 enthält eine Büchse 14, die den Block 4 umfaßt, und einen Feststeller 15, der zur Fixierung des Blocks 4 in bezug auf die Welle 3 in einer vorgegebenen Lage dient.

Die Büchse 14 ist relativ zum Block 4 hin- und herverschiebbar. Zur Verhinderung einer Drehung der Büchse 14 relativ zum Block 4 ist sie mittels eines Längskeils 16 gesichert.

In der Büchse 14 ist an der dem Block 4 zugewandten Oberfläche in der Nähe einer Stirnseite eine Eindrehung 17 ausgeführt, die mit ihrem einen Ende auf diese Stirnseite hinausgeht und zur Aufnahme des Feststellers 15 bei der Entriegelung des Blocks 4 bezüglich der Welle 3 dient.

An der Welle 3 ist eine entsprechende Vertiefung 18 zur Aufnahme des Feststellers 15 während der Fixierung des Blocks 4 in bezug auf die Welle 3 eingearbeitet. Hierbei ist im Block 4 eine Durchgangsbohrung 19 zur Unterbringung des Feststellers 15 ausgeführt.

In Abhängigkeit von der Größe der am Block 4 angreifenden Axialkraft können in einer          zur Achse a – a
der Welle 3 querverlaufenden Ebene mehrere Durchgangsbohrungen 19 zur Unterbringung von mehreren Feststellern 15 ausgeführt sein. In diesem Fall sollen in der Welle 3 in ein
und derselben Ebene, die quer zur Achse a – a geht, eine entsprechende Anzahl von Vertiefungen 18 eingearbeitet sein.

Im vorliegenden Beispiel ist der Feststeller 15 in Form
von zwei Kugeln 20 ausgebildet, die in der Bohrung 19 des
Blocks 4 frei angeordnet sind. Jedoch kann der Feststeller
15 eine beliebige bekannte Konstruktion haben, die zur Fixie-
rung zweier Einzelteile gegen eine / gegenseitige Verschiebung bestimmt ist.

Der Gesamtbetrag der Durchmesser zweier Kugeln 20 soll
etwas größer als die Länge der Bohrung 19 sein, in welcher
sie untergebracht sind. Dies ist erforderlich zur Ermöglichung ihres Eingriffs mit der Eindrehung 17 in der Büchse
14 während der Entriegelung des Blocks 4 in bezug auf die
Welle 3 und zum Zusammenwirken mit der Vertiefung 18 der
Welle 3 im Augenblick der Fixierung des Blocks 4 in bezug
auf die Welle 3.

In der Büchse 14 ist auf der Außenseite eine Ringnut 21
zum Zusammenwirken mit einer Gabel 22 eingearbeitet.

Die Gabel 22 besitzt einen Kraftantrieb 23. Der Kraftantrieb 23 enthält einen Hydraulikzylinder 24, in dessen Gehäuse 25 Öffnungen 26 und 27 zum Ein- und Auslassen der
Flüssigkeit ausgeführt sind. Im Hohlraum 28 des Hydraulikzylinders 24 befindet sich ein Kolben 29 mit Kolbenstange 30.
Die Kolbenstange 30 ist mittels einer Mutter 31 mit der Gebel 22 starr verbunden.

In dem vorstehend beschriebenen Beispiel besitzt der
Block 4 das mit Geradzähnen versehene Zahnrad 8. Jedoch kann
dieses Zahnrad 8 auch mit Schrägzähnen ausgeführt sein. In
diesem Fall soll das ins Zahnrad 8 des Blocks 4 eingreifende Zahnrad 12 des Blocks 11 ebenfalls Schrägzähne haben. Im
Augenblick des Eingriffs des Zahnrades 8 des Blocks 4 mit
dem Zahnrad 12 des Blocks 11 entsteht eine Axialkraft, die
bestrebt sein wird, den Block 4 relativ zur Welle 3 zu verschieben. Deshalb wird es erforderlich, den Block 4 in bezug auf die Welle 3 in dieser Lage zu fixieren.

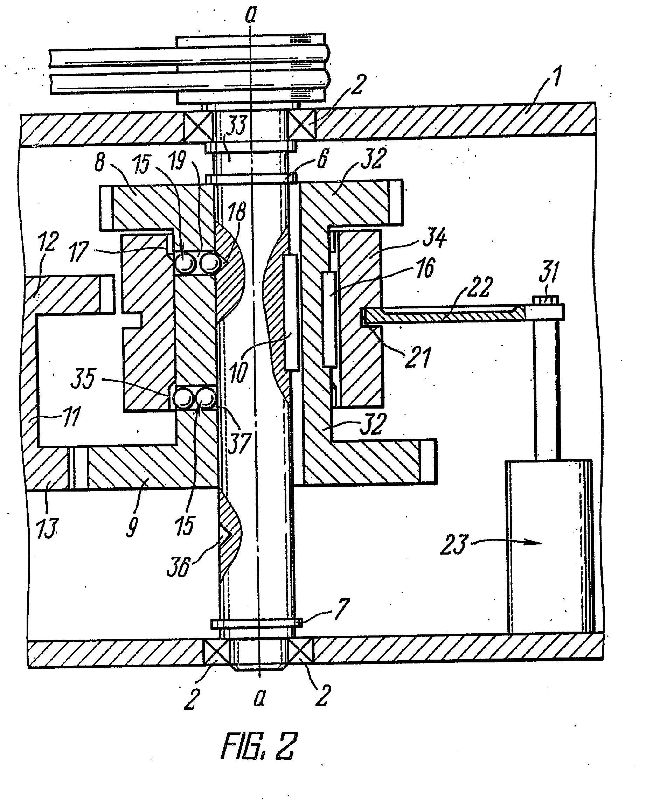

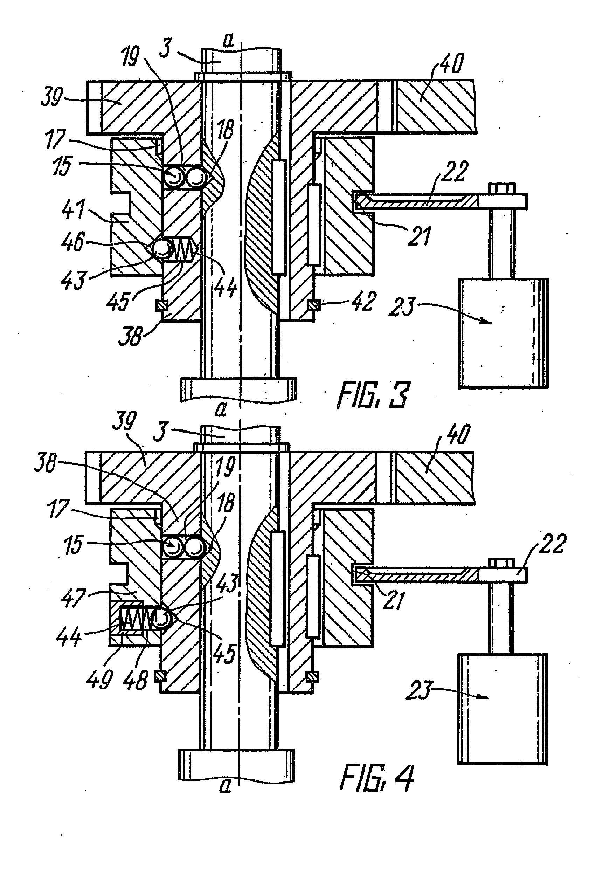

In Fig. 2 ist ein Geschwindigkeitsumschaltmechanismus dargestellt, der einen Block 32 mit Zahnrädern 8 und 9 besitzt, welche Schrägzähne aufweisen.

Die Einrichtung zur Fixierung des Blocks 32 in bezug auf die Welle 33 enthält eine Büchse 34, die den Block 32 umfaßt, und Feststeller 15 zur Fixierung des Blocks 32 in bezug auf die Welle 33.

In der Büchse 34 sind in der Nähe jeder Stirnseite Eindrehungen 17 und 35 ausgeführt, die zur Aufnahme der Feststeller 15 während der Entriegelung des Blocks 32 bezüglich der Welle 33 dienen. An der Welle 33 sind entsprechende Vertiefungen 18 und 36 zur Aufnahme der Feststeller 15 während der Fixierung des Blocks 32 in bezug auf die Welle 33 eingearbeitet.

Hierbei sind im Block 32 Durchgangsbohrungen 19 und 37 zur Unterbringung der Feststeller 15 ausgeführt. Die Bohrungen liegen in zwei verschiedenen, zur Achse a – a der Welle 33 querverlaufenden Ebenen.

In Abhängigkeit von der erforderlichen Anzahl der fixierten Lagen des Blocks 32 in bezug auf die Welle 33 können die Durchgangsbohrungen 19,37 im Block 32 zur Unterbringung der Fixatoren 15 in mehreren Ebenen ausgeführt sein, die zur Achse a – a der Welle 33 querverlaufen. In diesem Fall muß an der Welle 33 eine entsprechende Anzahl von Vertiefungen 18,36 eingearbeitet sein.

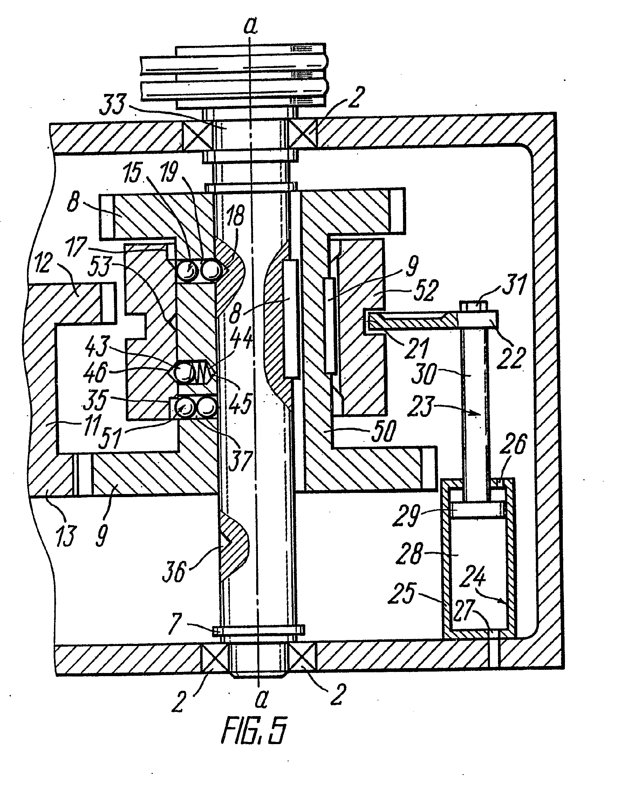

In Fig. 3 ist eine weitere Ausführungsform des Geschwindigkeitsumschaltmechanismus gemäß der Erfindung dargestellt.

In dieser Ausführungsform besitzt der Block 38 ein Eingriffselement – ein Zahnrad 39 mit Schrägzähnen. Der zweite Block /nicht dargestellt/ besitzt ebenfalls ein Zahnrad 40 mit Schrägzähnen, das mit dem Zahnrad 39 des Blocks 38 periodisch zum Eingriff kommen kann.

In einer den Block 38 umfassenden Büchse 41 ist an der diesem Block 38 zugewandten Oberfläche in der Nähe der einen Stirnseite eine Eindrehung 17 ausgeführt, die mit ihrem einen Ende auf diese Stirnseite hinausgeht und zur Aufnahme des Feststellers 15 bei der Entriegelung des Blocks 38 bezüglich der Welle 3 dient.

An der Welle 3 ist eine entsprechende Vertiefung 18 zur Aufnahme des Feststellers 15 während der Fixierung des Blocks 38 in bezug auf die Welle 3 eingearbeitet. Hierbei ist im Block 38 eine Durchgangsbohrung 19 zur Unterbringung des Feststellers 15 ausgeführt.

Die hin- und hergehende Verschiebung der Büchse 41 relativ zum Block 38 ist durch die untere Fläche des Zahnrades 39 und einen Ring 42 begrenzt.

Die Einrichtung zur Fixierung des Blocks 38 in bezug auf die Welle 3 besitzt einen zusätzlichen Feststeller 43 mit federndem Glied 44 zur Fixierung der Büchse 41 in bezug auf den Block 38.

Die Verwendung eines zusätzlichen Feststellers 43 mit federndem Glied 44 gestattet es, einen Spalt zwischen der Gabel 22 und der Wand der Ringnut 21 der Büchse 41 herzustellen. Dieser Spalt schließt die Reibung der Gabel 22 an der Büchse 41 und folglich die Wärmeentwicklung infolge von Gleitreibung völlig aus. Das Fehlen der Gleitreibung erhöht die Zuverlässigkeit und Lebensdauer des Geschwindigkeitsumschaltmechanismus und erlaubt es, Werkstücke auf Werkzeugmaschinen, in denen dieser Mechanismus zum Einsatz gelangt, mit hoher Genauigkeit zu bearbeiten.

Zur Aufnahme dieses zusätzlichen Feststellers 43 ist im Block 38 auf der zur Büchse 41 gekehrten Seite eine Vertiefung 45 eingearbeitet. In der Büchse 41 ist auf der gegenüberliegenden Seite eine entsprechende Vertiefung 46 eingearbeitet.

Im vorliegenden Beispiel ist als federndes Glied 44 eine Feder und als zusätzlicher Feststeller 43 eine Kugel verwendet. Jedoch kann als federndes Glied 44 ein beliebiges anderes federndes Element zur Verwendung kommen, beispielsweise Gummi, Luft usw., und der zusätzliche Feststeller 43 kann eine beliebige bekannte Konstruktion haben, die zur Fixierung zweier Einzelteile gegen/gegenseitige eine Verschiebung bestimmt ist.

Zur Erleichterung der Aufnahme des zusätzlichen Feststellers 43 /Fig. 4/ mit    federndem Glied 44 kann in einer Büchse 47 anstelle der Vertiefung eine Durchgangsbohrung 48 ausgeführt sein, in welcher das federnde Glied 44 /die Feder/ mit dem Feststeller 43 /die Kugel/ untergebracht ist. Die Feder ist durch einen Gewindestopfen 49 angedrückt.

Die Ausführung einer durchgehende Bohrung 48 in der Büchse 47 bietet die Möglichkeit, die elastische Kraft des Gliedes 44 zu regeln und dieses Glied im Falle eines Bruchs ohne Zerlegung des ganzen Mechanismus auszuwechseln.

In Fig. 5 ist eine /weitere/Ausführungsform des erfindungsgemäßen Geschwindigkeitsumschaltmechanismus dargestellt.

In diesem Beispiel sind in einem Block 50 zwei Durchgangsbohrungen 19 und 37 zur Unterbringung / zweier Feststeller 15 und 51 ausgeführt. Die Durchgangsbohrungen 19 und 37 liegen in zwei zur Achse a - a der Welle 33 querverlaufenden Ebenen.

In der Welle 33 sind zwei entsprechende Vertiefungen 18 und 36 zur Aufnahme der Feststeller 15 und 51 zur Fixierung des Blocks 50 in bezug auf die Welle 33 in zwei Lagen eingearbeitet. Hierbei ist in einer Büchse 52 in der Nähe der oberen Stirnseite eine Eindrehung 17 und in der Nähe der unteren Stirnseite eine Eindrehung 35 eingearbeitet. Außerdem besitzt der Geschwindigkeitsumschaltmechanismus einen zusätzlichen Feststeller 43 mit federndem Glied 44, zu dessen Aufnahme im Block 50 auf der zur Büchse 52 gekehrten Seite eine Vertiefung 45 eingearbeitet ist. In der Büchse 52 sind auf der gegenüberliegenden Seite zwei Vertiefungen 46 und 53 zur Fixierung der Büchse 52 in bezug auf den Block 50 in zwei Stellungen eingearbeitet.

In diesem Beispiel sind in der Büchse 52 zwei Vertiefungen 46 und 53 eingearbeitet, aber es können auch mehr solche Vertiefungen vorgesehen sein. Die Anzahl der Vertiefungen hängt von der erforderlichen Anzahl der fixierten Lagen des Blocks in bezug auf die Welle ab.

Das ist die optimalste Ausführungsform des Geschwindigkeitsumschaltmechanismus, der eine hohe Zuverlässigkeit und Lebensdauer besitzt und den Einsatz    in Werkzeugmaschinen zur Bearbeitung von Werkstücken mit einer hohen Oberflächengenauigkeit ermöglicht. Außerdem fehlt beim

Einsatz des erfindungsgemäßen Mechanismus die Reibung zwischen der Büchse 52 und der Gabel 22 vollkommen.

Der in Fig. 1 dargestellte Geschwindigkeitsumschaltmechanismus arbeitet folgenderweise.

Dem Hydraulikzylinder 24 wird über die Öffnung 27 die Betriebsflüssigkeit zugeführt. Bei der Zuführung der Betriebsflüssigkeit beginnen der Kolben 29, die Kolbenstange 30 und die Gabel 22 sich aufwärts zu bewegen, indem sie die Büchse 14 mitnehmen. Die Büchse 14 bewegt sich fortschreitend nach oben und nimmt den Block 4 mit den Eingriffselementen 5 bis zu einer Lage mit, bei welcher das Zahnrad 9 des Blocks 4 mit dem Zahnrad 13 des Blocks 11 zum Eingriff kommt. Die Kugeln 20 des Feststellers 15 befinden sich in der Durchgangsbohrung 19 des Blocks 4 und in der Eindrehung 17 der Büchse 14. Im Augenblick des Eingriffs des Zahnrades 9 mit dem Zahnrad 13 erreichen die Kugeln 20 die Vertiefung 18 an der Welle 3, und eine der Kugeln 20 geht in diese Vertiefung 18 ein, während die andere aus der Eindrehung 17 der Büchse 14 herausrollt und mit der dem Block 14 zugewandten Oberfläche der Büchse 4 in Berührung kommt. Die Büchse 14, die sich mit ihrer Innenfläche gegen die Kugel 20 abstützt, fixiert den Block 4 starr in bezug auf die Welle 3 in der erforderlichen Lage. Hiernach kann sich der Block 4 der Zahnelemente 5 nach oben oder nach unten relativ zur Welle 3 nicht verschieben, weil die Feststeller 15 unter der Wirkung der am Block 4 angreifenden Axialkraft/aus der Vertiefung 18 unmöglich ausgestoßen werden können. Die am Block 4 angreifende Axialkraft wird unmittelbar auf die Welle 3 und weiter auf die Wälzlager 2-vorbei an der Gabel 22-übertragen. Auf die Berührungsfläche der Büchse 14 und der Gabel 22 wird nur das Gewicht der Büchse 14 einen Druck ausüben. Infolgedessen wird die Gleitreibung an der Berührungsstelle beträchtlich vermindert, der Verschleiß der Berührungsflächen verringert und folglich die Zuverlässigkeit und Lebensdauer des Geschwindigkeitsumschaltmechanismus erhöht. Außerdem entsteht die Möglichkeit, den erfindungsgemäßen Mechanismus in Werkzeugmaschinen zur Bearbeitung von Werkstücken mit hoher Oberflächengenauigkeit einzusetzen.

Bei der Zuführung der Betriebsflüssigkeit in den Hydraulikzylinder 24 über die Öffnung 26 arbeitet der Geschwindigkeitsumschaltmechanismus ähnlich in umgekehrter Richtung.

Der in Fig. 5 dargestellte Geschwindigkeitsumschaltmechanismus arbeitet folgendermaßen.

Bei der Zuführung der Betriebsflüssigkeit in den Hydraulikzylinder 24 über die Öffnung 26 beginnen der Kolben 29, die Kolbenstange 30 und die Gabel 22 sich nach abwärts zu bewegen, indem sie die Büchse 52 mitnehmen. Die Büchse 52 drückt den zusätzlichen Feststeller 43 mit dem federnden Glied 44 in die im Block 50 eingearbeitete Vertiefung 45 ein und gibt die Feststeller 15 frei, die sich in der Durchgangsbohrung 19 des Blocks 50 befinden, welche in der zur Achse a - a der Welle 33 querverlaufenden oberen Ebene ausgeführt sind. Die Feststeller 15 rollen in die in der Nähe der oberen Stirnseite der Büchse 52 ausgeführte Eindrehung 17 heraus und befreien den Block 50 von der starren Fixierung auf der Welle 33. Bei der weiteren Abwärtsbewegung der Büchse 52 fallen die in der Durchgangsbohrung 37 des Blocks 50 befindlichen Feststeller 51 in die Vertiefung 36 der Welle 33 ein und fixieren den Block 50 starr in bezug auf die Welle 33 in der Lage des Eingriffs des Zahnrades 8 des Blocks 50 mit dem Zahnrad 12 des Blocks 11. Hiernach wird die Büchse 52 um einen bestimmten Abstand nach unten verschoben und am Block 50 mittels des zusätzlichen Feststellers 43 mit dem federnden Glied 44 fixiert, welcher in die Vertiefung 53 der Büchse 52 einfällt, indem er einen Spalt oben und unten zwischen der Gabel 22 und der Oberfläche der in der Büchse 52 auf der Außenseite eingearbeiteten Ringnut 21 sicherstellt. Hiernach kann sich die Büchse 52 relativ zum Block 50 nicht verschieben, weil sie von dem zusätzlichen Feststeller 43 mit dem federnden Glied 44 gehalten wird, während sich der Block 50 relativ zur Welle 33 nicht verschieben kann, weil die Feststeller 51 aus der Vertiefung 36 der Welle 33 unter der Wirkung der am Block 50 angreifenden Axialkraft unmöglich ausgestoßen werden können.

Bei der Zuführung der Betriebsflüssigkeit in den Hydraulikzylinder 24 über die Öffnung 27 arbeitet der Geschwindigkeitsumschaltmechanismus ähnlich in umgekehrter Richtung.

In diesem Ausführungsbeispiel des Geschwindigkeitsumschaltmechanismus wird eine sichere Fixierung des Blocks 50 in bezug auf die Welle 33 und der Büchse 52 in bezug auf den Block 50 gewährleistet. Überdies ist hier die Reibung der Gabel 22 an der Büchse 52 völlig ausgeschlossen, was dazu führt, daß eine Wärmeentwicklung fehlt. Alles das erhöht die Zuverlässigkeit und Lebensdauer des Geschwindigkeitsumschaltmechanismus und bietet die Möglichkeit, den erfindungsgemäßen Mechanismus in Werkzeugmaschinen zur Bearbeitung von Werkstücken mit hoher Oberflächengenauigkeit einzusetzen.

Gewerbliche Verwertbarkeit

Die vorliegende Erfindung kann in verschiedenen Maschinen, Werkzeugmaschinen und Transportmitteln, die Eingriffselemente aufweisen, angewendet werden.

Am effektivsten kann diese Erfindung in Werkzeugmaschinen unterschiedlicher Typen, beispielsweise in spanabhebenden Werkzeugmaschinen, die zur Bearbeitung von Werkstücken hoher Genauigkeit bestimmt sind, nämlich in solchen Maschinen wie Koordinatenbohrwerken angewendet werden, wo die Eingriffselemente mit hohen Umfangsgeschwindigkeiten umlaufen.

PATENTANSPRÜCHE

1. Geschwindigkeitsumschaltmechanismus, in dessen Gehäuse auf einer Welle /3/ ein Block /4/ mit Eingriffselementen /5/ angeordnet ist, welcher mit einer Gabel /22/ zur hin- und hergehenden Verschiebung bei einer Geschwindigkeitsumschaltung kinematisch verbunden ist, und eine Einrichtung zur Fixierung des Blocks /4/ in bezug auf die Welle /3/ aufweist, dadurch g e k e n n z e i c h n e t, daß die Einrichtung zur Fixierung des Blocks /4/ eine Büchse /14/, die den Block /4/ mit den Eingriffselementen /5/ mit der Möglichkeit einer hin- und hergehenden Verschiebung umfaßt, sowie Feststeller /15/ enthält, für deren Unterbringung im Block /4/ zumindest eine Durchgangsbohrung /19/ in mindestens einer zur Achse /a - a/ der Welle /3/ querverlaufenden Ebene ausgeführt ist, in welcher Welle eine entsprechende Vertiefung /18/ zur Aufnahme jedes Feststellers /15/ während der Fixierung des Blocks /4/ in bezug auf die Welle /3/ eingearbeitet ist, während in der Büchse /14/ an der dem Block /4/ zugewandten Oberfläche zumindest in der Nähe der einen Stirnseite eine Eindrehung /17/ zur Aufnahme der Feststeller /15/ bei der Entriegelung des Blocks /14/ bezüglich der Welle /3/ ausgeführt ist, wobei die kinematische Verbindung des Blocks /4/ mit der Gabel /22/ über die Büchse /14/ hergestellt ist, wozu auf der Außenseite der letzteren eine Ringnut /21/ zur Zusammenwirkung mit der Gabel /22/ eingearbeitet ist.

2. Geschwindigkeitsumschaltmechanismus nach Anspruch 1, dadurch g e k e n n z e i c h n e t, daß die Einrichtung zur Fixierung des Blocks /38/ mindestens einen zusätzlichen Feststeller /43/ mit federndem Glied /44/ besitzt, für dessen Aufnahme im Block /38/ auf der zur Büchse /41/ gekehrten Seite und in der Büchse /41/ auf der gegenüberliegenden Seite Vertiefungen /45/ und /46/ eingearbeitet sind.

3. Geschwindigkeitsumschaltmechanismus nach Anspruch 1, dadurch g e k e n n z e i c h n e t, daß die Einrichtung zur Fixierung des Blocks /38/ mindestens einen zusätzlichen Feststeller /43/ mit federndem Glied /44/ besitzt, für dessen Unterbringung in der Büchse /47/ auf der zum Block /38/ gekehrten Seite eine Durchgangsbohrung /48/ ausgeführt ist,

0248087

und . im Block /38/ auf der gegenüberliegenden Seite eine Vertiefung /45/ eingearbeitet ist.

0248087

FIG. 1

FIG. 2

FIG. 3

FIG. 4

FIG. 5

# INTERNATIONAL SEARCH REPORT

International Application No PCT/SU 85/00097

## I. CLASSIFICATION OF SUBJECT MATTER (if several classification symbols apply, indicate all) [6]

According to International Patent Classification (IPC) or to both National Classification and IPC

IPC[4]: F 16 H 3/16, 5/00

## II. FIELDS SEARCHED

| Minimum Documentation Searched [7] | |
|---|---|
| Classification System | Classification Symbols |
| IPC[4] | F 16 H 3/00, 3/02, 3/16, 3/20, 3/22, 5/00+5/08 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | FR, A5, 2199831 (LIGNES TELEGRAPHIQUES ET TELEPHONIQUES) 12 April 1974 (12.04.74) see figures 1,2, page 2, lines 20-36, page 3, lines 1-21 | 1-3 |
| A | US, A, 2214819 (Hydraulic Coupling Patents Limited) 17 September 1940 (17.09.40) see figure 2, page 1, column 2, lines 45-55, page 3., column 1, lines 45-60 | 1-3 |
| A | SU, A1, 956868 (N.F. Spitsin). 17 September 1982 (17.09.82) | 1-3 |

---

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 14 May 1986 (14.05.86) | 04 July 1986 (04.07.86) |
| International Searching Authority | Signature of Authorized Officer |
| ISA/SU | |

Form PCT/ISA/210 (second sheet) (January 1985)